# EUROPEAN PATENT APPLICATION

(11) **EP 4 654 271 A1**
(43) Date of publication of application: **26.11.2025**
(21) Application number: 25170248.6
(22) Date of filing: 14.04.2025
(51) Int. Cl.: H01M 4/04, H01M 4/36, H01M 4/66, H01M 4/74, H01M 10/052, H01M 4/13, H01M 4/139, H01M 4/62, H01M 4/02

(54) **ELECTRODE FOR RECHARGEABLE LITHIUM BATTERY, RECHARGEABLE LITHIUM BATTERY, AND METHOD OF MANUFACTURING THE SAME**

(30) Priority: 24.05.2024 KR 20240067970
(71) Applicant: SAMSUNG SDI CO., LTD., Yongin-si, Gyeonggi-do 17084 (KR)
(72) Inventor: Choi, Jinkyu, 17084 Yongin-si, Gyeonggi-do (KR); Lee, Wongi, 17084 Yongin-si, Gyeonggi-do (KR)
(74) Representative: Michalski Hüttermann & Partner Patentanwälte mbB

(57) **Abstract**

Example embodiments include electrodes, rechargeable lithium batteries including the electrodes, and methods of manufacturing the electrodes. The electrode for a rechargeable lithium battery includes a current collector, an active material layer on at least one surface of the current collector, and a porous film in the active material layer. The rechargeable lithium battery includes the electrode mentioned above. The method of manufacturing the electrode includes providing a preliminary porous film, and providing an active material on the preliminary porous film to form a porous film and a second preliminary active material layer.

## Description

### CROSS-REFERENCE TO RELATED APPLICATION

This application claims priority to Korean Patent Application No. 10-2024-0067970 filed on May 24, 2024 in the Korean Intellectual Property Office.

### BACKGROUND

Examples of the present disclosure relates to an electrode for a rechargeable lithium battery, a rechargeable lithium battery including the electrode, and a method of manufacturing the electrode. Example of the present disclosure relate to an electrode including a porous polymer sheet in a structure thereof for a rechargeable lithium battery, a rechargeable lithium battery including the electrode, and a method of fabricating the electrode.

With increasing use of battery using electronic devices, such as, e.g., mobile phones, laptop computers, electric vehicles, and the like, there is increasing demand for rechargeable batteries with high energy density and high capacity. Therefore, improving performance of rechargeable lithium batteries may be advantageous.

A rechargeable lithium battery includes a positive electrode, a negative electrode, and an electrolyte, the positive and negative electrodes include an active material in which intercalation and deintercalation are possible, and generates electrical energy caused by oxidation and reduction reactions when lithium ions are intercalated and deintercalated.

### SUMMARY

An example embodiment of the present disclosure includes an electrode for a rechargeable lithium battery having a high current density with high capacity in a limited volume.

An example embodiment of the present disclosure includes a rechargeable lithium battery with large capacity, substantially uniform thickness and quality, increased lifetime, and high efficiency.

An example embodiment of the present disclosure includes a method of manufacturing an electrode, the method readily implementable and suitable for mass production.

According to an example embodiment of the present disclosure, an electrode for a rechargeable lithium battery may include a current collector, an active material layer on at least one surface of the current collector, and a porous film in the active material layer.

According to an example embodiment of the present disclosure, a rechargeable lithium battery may include a positive electrode, a negative electrode opposite to the positive electrode, and a separator between the positive electrode and the negative electrode. At least one of the positive electrode and the negative electrode may include a current collector, an active material layer on at least one surface of the current collector, and a porous film in the active material layer.

According to an example embodiment of the present disclosure, a method of manufacturing an electrode for a rechargeable lithium battery may include forming a first preliminary active material layer on an electrode substrate, placing on the first preliminary active material layer a composite layer that includes a porous film, and integrally pressing the electrode substrate, the first preliminary active material layer, and the composite layer that are stacked, e.g., sequentially stacked. Forming the composite layer may include providing a preliminary porous film, and providing an active material on the preliminary porous film to form the porous film and a second preliminary active material layer. In the composite layer, the porous film may be in the second preliminary active material layer.

### BRIEF DESCRIPTION OF DRAWINGS

FIG. 1 illustrates a simplified conceptual diagram illustrating a rechargeable lithium battery according to an example embodiment of the present disclosure.
FIGS. 2 to 5 illustrate simplified diagrams illustrating a rechargeable lithium battery according to an example embodiment of the present disclosure.
FIG. 6 is a cross-sectional view illustrating a rechargeable lithium battery according to an example embodiment of the present disclosure.
FIGS. 7A and 7B are cross-sectional views illustrating an electrode of a rechargeable lithium battery according to an example embodiment of the present disclosure.
FIG. 8 is a cross-sectional view illustrating an electrode of a rechargeable lithium battery according to an example embodiment of the present disclosure.
FIGS. 9A and 9B are cross-sectional views illustrating a method of forming a composite layer according to an example embodiment of the present disclosure.
FIGS. 10 to 12 are cross-sectional views illustrating a method of manufacturing an electrode according to an example embodiment of the present disclosure.
FIG. 13 is a flow chart illustrating a method of manufacturing an electrode for a rechargeable lithium battery, according to various example embodiments.

### DETAILED DESCRIPTION

In order to sufficiently understand the configuration and effect of the present disclosure, some example embodiments of the present disclosure are described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

In this description, it is understood that, when an element is referred to as being "on" another element, the element can be directly on the other element or intervening elements may be present between therebetween. In the drawings, thicknesses of some components are exaggerated for effectively explaining the technical contents. Like reference numerals refer to like elements throughout the specification.

Unless otherwise specially noted in this description, the expression of singular form may include the expression of plural form. In addition, unless otherwise specially noted, the phrase "A or B" may indicate "A but not B", "B but not A", and "A and B". The terms "comprises/includes" and/or "comprising/including" used in this disclosure do not exclude the presence or addition of one or more other components.

As used herein, the term "combination thereof" may refer to a mixture, a stack, a composite, a copolymer, an alloy, a blend, or a reaction product.

When the terms "about" or "substantially" are used in this specification in connection with a numerical value, it is intended that the associated numerical value include a tolerance of ±10% around the stated numerical value. The expression "up to" includes amounts of zero to the expressed upper limit and all values therebetween. When ranges are specified, the range includes all values therebetween such as increments of 0.1%.

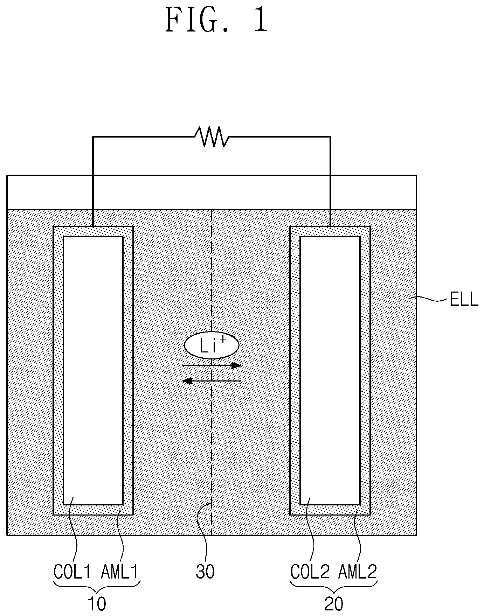

FIG. 1 illustrates a simplified conceptual diagram showing a rechargeable lithium battery according to an example embodiment of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. The separator 30 may be disposed between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be or include a medium by which lithium ions are transferred between the positive electrode 10 and the negative electrode 20. In the electrolyte ELL, the lithium ions may move through the separator 30 toward one of the positive electrode 10 and the negative electrode 20.

### Positive Electrode 10

The positive electrode 10 for a rechargeable lithium battery may include a current collector COL1 and a positive electrode active material layer AML1 formed on the current collector COL1. The positive electrode active material layer AML1 may include a positive electrode active material, and may further include a binder and/or a conductive material.

For example, the positive electrode 10 may further include an additive that can constitute a sacrificial positive electrode.

An amount of the positive electrode active material may be in a range of about 90 wt% to about 99.5 wt% relative to 100 wt% of the positive electrode active material layer AML1. An amount of each, or at least one, of the binder and the conductive material may be in a range of about 0.5 wt% to about 5 wt% relative to 100 wt% of the positive electrode active material layer AML1.

The binder may be configured to improve attachment of positive electrode active material particles to each other, and also to improve attachment of the positive electrode active material to the current collector COL1. The binder may include, for example, at least one of polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present disclosure is not limited thereto.

The conductive material may be configured to provide an electrode with conductivity, and any suitable conductive material that does not cause a chemical change in a battery may be included as the conductive material. The conductive material may include, for example, a carbon-based material such as at least one of natural graphite, artificial graphite, carbon black, acetylene black, Ketjen black, carbon fiber, carbon nano-fiber, and carbon nano-tube; a metal powder or metal fiber containing one or more of copper, nickel, aluminum, and silver; a conductive polymer such as a polyphenylene derivative; or a mixture thereof.

Aluminum (Al) may be included as the current collector COL1, but the present disclosure is not limited thereto.

### Positive Electrode Active Material

The positive electrode active material in the positive electrode active material layer AML1 may include a compound (e.g., lithiated intercalation compound) that can reversibly intercalate and deintercalate lithium. For example, the positive electrode active material may include at least one kind of composite oxide including lithium and metal that is or includes at least one of cobalt, manganese, nickel, and a combination thereof.

The composite oxide may include a lithium transition metal composite oxide, for example, at least one of lithium-nickel-based oxide, lithium-cobalt-based oxide, lithium-manganese-based oxide, lithium-iron-phosphate-based compounds, cobalt-free nickel-manganese-based oxide, or a combination thereof.

For example, the positive electrode active material may include a compound expressed by one of chemical formulae below. LiₐA_{1-b}X_{b}O_{2-c}D_{c} (where 0.90≤a≤1.8, 0≤b≤0.5, and 0≤c≤0.05); LiₐMn_{2-b}X_{b}O_{4-c}D_{c} (where 0.90≤a≤1.8, 0≤b≤0.5, and 0≤c≤0.05); LiₐNi_{1-b-c}Co_{b}X_{c}O_{2-α}D_{α} (where 0.90≤a≤1.8, 0≤b≤0.5, 0≤c≤0.5, and 0<α<2); LiₐNi_{1-b-c}Mn_{b}X_{c}O_{2-α}D_{α} (where 0.90≤a≤1.8, 0≤b≤0.5, 0≤c≤0.5, and 0<α<2); LiₐNi_{b}Co_{c}L¹_{d}GₑO₂ (where 0.90≤a≤1.8, 0≤b≤0.9, 0≤c≤0.5, 0≤d≤0.5, and 0≤e≤0.1); LiₐNiG_{b}O₂ (where 0.90≤a≤1.8 and 0.001≤b≤0.1); LiₐCoG_{b}O₂ (where 0.90≤a≤1.8 and 0.001≤b≤0.1); LiₐMn_{1-b}G_{b}O₂ (where 0.90≤a≤1.8 and 0.001≤b≤0.1); LiₐMn₂G_{b}O₄ (where 0.90≤a≤1.8 and 0.001≤b≤0.1); LiₐMn_{1-g}G_{g}PO₄ (where 0.90≤a≤1.8 and 0≤g≤0.5); Li_{(3-f)}Fe₂(PO₄)₃ (where 0≤f≤2); LiₐFePO₄ (where 0.90≤a≤1.8).

In the chemical formulae above, A is or include at least one of Ni, Co, Mn, or a combination thereof, X is or include at least one of Al, Ni, Co, Mn, Cr, Fe, Mg, Sr, V, a rare-earth element, or a combination thereof, D is or include at least one of O, F, S, P, or a combination thereof, G is or include at least one of Al, Cr, Mn, Fe, Mg, La, Ce, Sr, V, or a combination thereof, and L¹ is or include at least one of Mn, Al, or a combination thereof.

For example, the positive electrode active material may be or include a high-nickel-based positive electrode active material having a nickel amount that is equal to or greater than about 80 mol%, equal to or greater than about 85 mol%, equal to or greater than about 90 mol%, equal to or greater than about 91 mol%, or equal to or greater than about 94 mol% and equal to or less than about 99 mol% relative to 100 mol% of metal devoid of lithium in the lithium transition metal composite oxide. The high-nickel-based positive electrode active material may achieve high capacity and thus may be applied to a high-capacity and high-density rechargeable lithium battery.

### Negative Electrode 20

The negative electrode 20 for a rechargeable lithium battery may include a current collector COL2 and a negative electrode active material layer AML2 located on the current collector COL2. The negative electrode active material layer AML2 may include a negative electrode active material and may further include a binder and/or a conductive material.

For example, the negative electrode active material layer AML2 may include a negative electrode active material in a range of about 90 wt% to about 99 wt%, a binder in a range of about 0.5 wt% to about 5 wt%, and a conductive material in a range of about 0 wt% to about 5 wt%.

The binder may be configured to improve attachment of negative electrode active material particles to each other, and also to improve attachment of the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include at least one of styrene-butadiene rubber, (meth)acrylated styrene-butadiene rubber, (meth)acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

When an aqueous binder is included as the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include at least one of Na, K, or Li.

The dry binder may include a fibrillizable polymer material, for example, at least one of polytetrafluoroethylene, polyvinylidene fluoride, polyvinylidene fluoride-hexafluoropropylene copolymer, polyethylene oxide, or a combination thereof.

The conductive material may be configured to provide an electrode with conductivity, and any suitable conductive material that does not cause a chemical change in a battery may be included as the conductive material. For example, the conductive material may include a carbon-based material such as at least one of natural graphite, artificial graphite, carbon black, acetylene black, Ketjen black, carbon fiber, carbon nano-fiber, and carbon nano-tube; a metal powder or metal fiber including one or more of copper, nickel, aluminum, and silver; a conductive polymer such as a polyphenylene derivative; or a mixture thereof.

The current collector COL2 may include at least one of a copper foil, a nickel foil, a stainless-steel foil, a titanium foil, a nickel foam, a copper foam, a polymer substrate coated with a conductive metal, or a combination thereof.

### Negative Electrode Active Material

The negative electrode active material in the negative electrode active material layer AML2 may include at least one of a material that can reversibly intercalate and deintercalate lithium ions, lithium metal, a lithium metal alloy, a material that can dope and de-dope lithium, or transition metal oxide.

The material that can reversibly intercalate and deintercalate lithium ions may include a carbon-based negative electrode active material, for example, crystalline carbon, amorphous carbon, or a combination thereof. For example, the crystalline carbon may include graphite such as non-shaped, sheet-shaped, flake-shaped, substantially sphere-shaped, or fiber-shaped natural or artificial graphite, and the amorphous carbon may include at least one of soft carbon, hard carbon, mesophase pitch carbon, or calcined coke.

The lithium metal alloy may include an alloy of lithium and metal that is or includes at least one of Na, K, Rb, Cs, Fr, Be, Mg, Ca, Sr, Si, Sb, Pb, In, Zn, Ba, Ra, Ge, Al, and Sn.

The material that can dope and de-dope lithium may include at least one of a Si-based negative electrode active material or a Sn-based negative electrode active material. The Si-based negative electrode active material may include at least one of silicon, silicon-carbon composite, SiOx (where 0<x<2), Si-Q alloy (where Q is or includes at least one of alkali metal, alkaline earth metal, Group 13 element, Group 14 element (except for Si), Group 15 element, Group 16 element, transition metal, a rare-earth element, or a combination thereof), or a combination thereof. The Sn-based negative electrode active material may include at least one of Sn, SnO₂, a Sn-based alloy, a combination thereof.

The silicon-carbon composite may be or include a composite of silicon and amorphous carbon. According to an example embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) positioned on a surface of the secondary particle. The amorphous carbon may also be positioned between the primary silicon particles, and for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles, and may also include an amorphous carbon coating layer on a surface of the core.

The Si-based negative electrode active material or the Sn-based negative electrode active material may be combined with a carbon-based negative electrode active material.

### Separator 30

Based on the type of the rechargeable lithium battery, the separator 30 may be present between the positive electrode 10 and the negative electrode 20. The separator 30 may include one or more of polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer on one or opposite surfaces of the porous substrate, and the coating layer includes an organic material, an inorganic material, or a combination thereof.

The porous substrate may be or include a polymer layer including at least one of polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon, and polytetrafluoroethylene, or may be or include a copolymer or mixture including two or more of the materials mentioned above.

The organic material may include a polyvinylidenefluoride-based copolymer or a (meth)acrylic copolymer.

The inorganic material may include an inorganic particle such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, Boehmite, or a combination thereof, but the present disclosure is not limited thereto.

The organic material and the inorganic material may be mixed in one coating layer, or may be present as a stack of a coating layer including the organic material and a coating layer including an inorganic material.

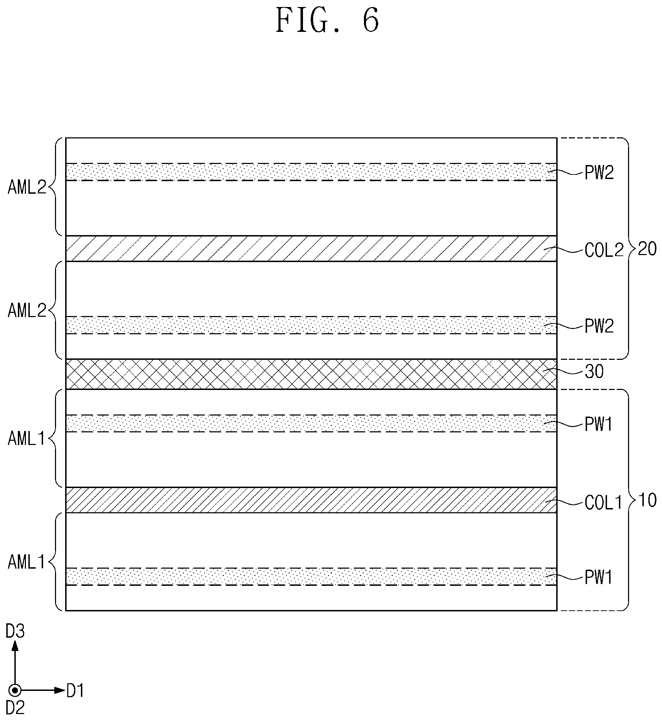

The negative electrode active material layer AML2 according to some example embodiments of the present disclosure is further discussed in detail below with reference to FIGS. 6 to 8.

### Electrolyte ELL

The electrolyte ELL for a rechargeable lithium battery may include a non-aqueous organic solvent and a lithium salt. The non-aqueous organic solvent may constitute a medium for transmitting ions that participate in an electrochemical reaction of the battery. The non-aqueous organic solvent may include at least one of a carbonate-based solvent, an ester-based solvent, an ether-based solvent, a ketone-based solvent, an alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC).

The ester-based solvent may include at least one of methyl acetate, ethyl acetate, n-propyl acetate, dimethyl acetate, methyl propionate, ethyl propionate, decanolide, mevalonolactone, valerolactone, or caprolactone.

The ether-based solvent may include at least one of dibutyl ether, tetraglyme, diglyme, dimethoxyethane, 2-methyltetrahydrofuran, 2.5-dimethyltetrahydrofuran, or tetrahydrofuran. The ketone-based solvent may include cyclohexanone. The alcohol-based solvent may include at least one of ethyl alcohol or isopropyl alcohol. The aprotic solvent may include at least one of nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1.4-dioxolane; or sulfolanes.

The non-aqueous organic solvent may be used alone or in a mixture of two or more solvents.

In addition, when the solvent is a carbonate-based solvent, a cyclic carbonate and a chain carbonate may be mixed, and the cyclic carbonate and the chain carbonate may be mixed in a volume ratio in a range of about 1:1 to about 1:9.

The lithium salt may be or include a material that is configured to dissolve in the non-aqueous organic solvent to constitute a supply source of lithium ions in a battery, and that plays a role in enabling a basic operation of a rechargeable lithium battery and in promoting the movement of lithium ions between positive and negative electrodes. The lithium salt may include, for example, at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where x and y are integers of 1 to 20), lithium trifluoromethane sulfonate, lithium tetrafluoroethanesulfonate, lithium difluorobis(oxalato)phosphate (LiDFBOP), and lithium bis(oxalato)borate (LiBOB).

### Rechargeable Lithium Battery

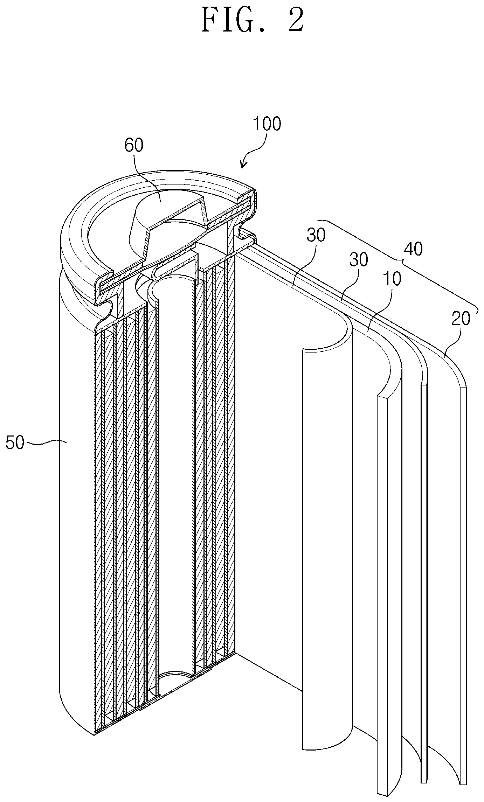

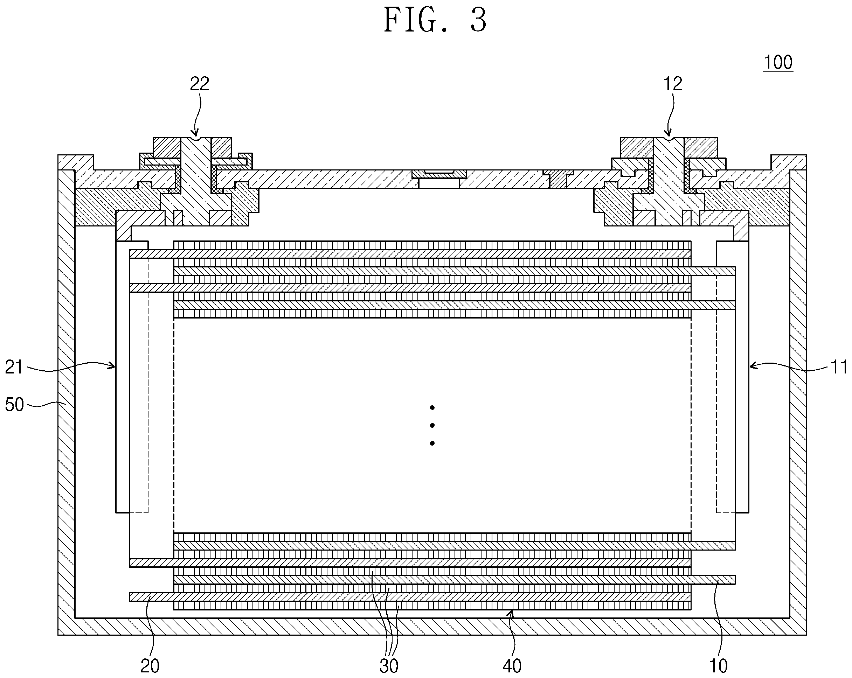

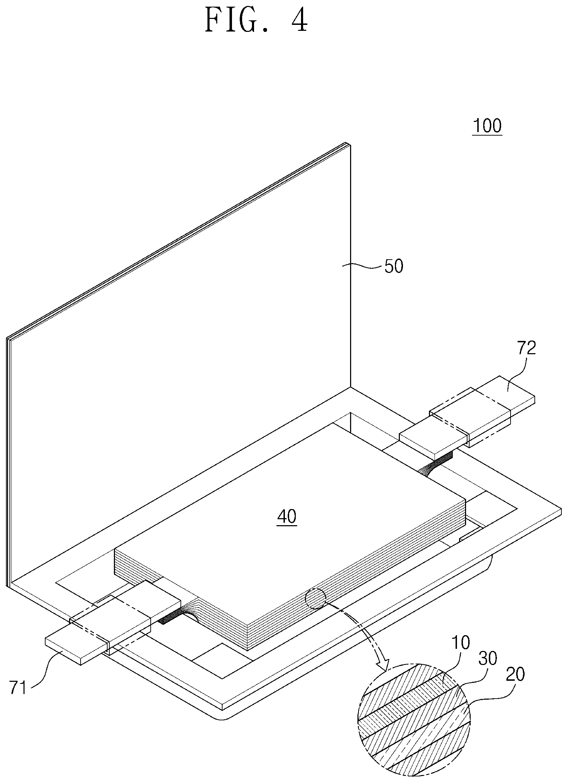

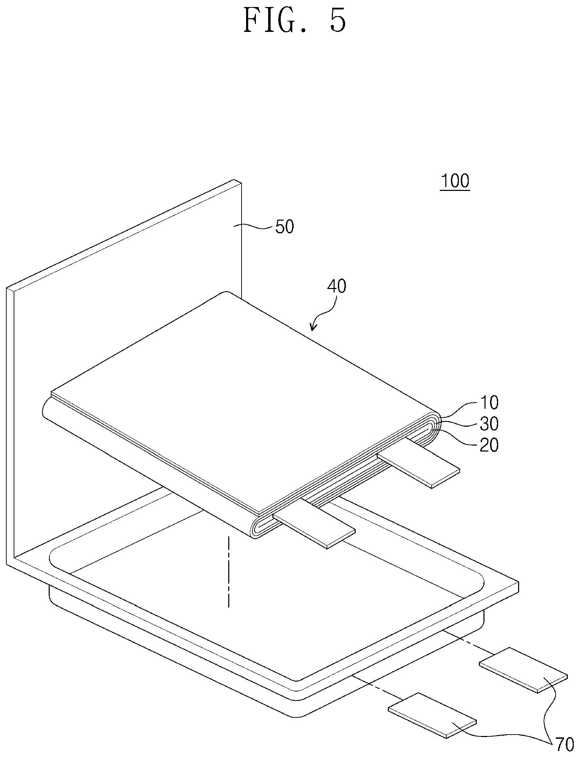

Based on the shape of a rechargeable lithium battery, the rechargeable lithium battery may be classified into cylindrical, prismatic, pouch, and coin types. In FIGS. 2 to 5 are simplified diagrams illustrating a rechargeable lithium battery according to an example embodiment, FIG. 2 illustrates a cylindrical battery, FIG. 3 illustrates a prismatic battery, and FIGS. 4 and 5 illustrate pouch-type batteries. Referring to FIGS. 2 to 4, a rechargeable lithium battery 100 may include an electrode assembly 40 in which a separator 30 is interposed between neighboring two electrodes among a plurality of positive electrodes 10 and a plurality of negative electrodes 20, and may also include a casing 50 in which the electrode assembly 40 is accommodated. The plurality of positive electrodes 10, the plurality of negative electrodes 20, and the separator 30 may be impregnated in an electrolyte (not shown). The rechargeable lithium battery 100 may include a sealing member 60 that seals the casing 50 as illustrated in FIG. 2. In addition, as illustrated in FIG. 3, the rechargeable lithium battery 100 may include a positive electrode lead tab 11, a positive electrode terminal 12, a negative electrode lead tab 21, and a negative electrode terminal 22. As illustrated in FIGS. 4 and 5, the rechargeable lithium battery 100 may include an electrode tab 70 illustrated in FIG. 5, or a positive electrode tab 71 and a negative electrode tab 72 illustrated in FIG. 4, the electrode tabs 70/71/72 forming an electrical path for externally inducing a current generated in the electrode assembly 40 to the outside of the battery 100.

The following describes in detail a rechargeable lithium battery according to some example embodiments of the present disclosure, and an electrode included therein.

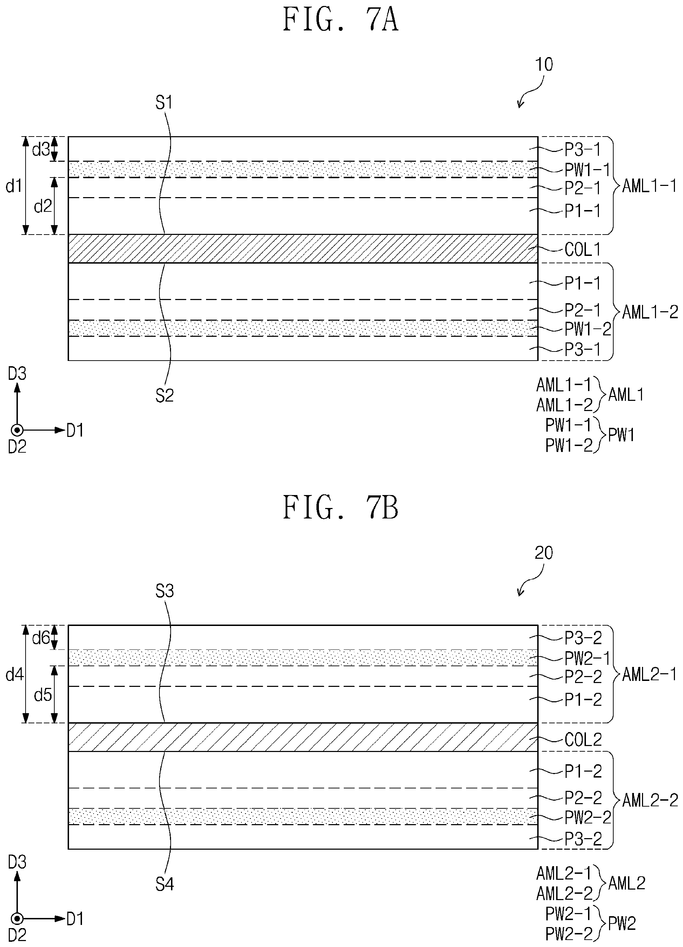

FIG. 6 illustrates a cross-sectional view illustrating a rechargeable lithium battery according to an example embodiment of the present disclosure. FIGS. 7A and 7B are cross-sectional views illustrating an electrode of a rechargeable lithium battery according to an example embodiment of the present disclosure. FIG. 6 illustrates one positive electrode 10, one negative electrode 20, and one separator 30 interposed between the positive electrode 10 and the negative electrode 20 of a rechargeable lithium battery according to an example embodiment. FIG. 7A illustrates one positive electrode 10 included in a rechargeable lithium battery according to an example embodiment, and FIG. 7B illustrates one negative electrode 20 included in a rechargeable lithium battery according to an example embodiment.

Referring to FIG. 6, as discussed above with reference to FIG. 1, a rechargeable lithium battery according to the present disclosure may include a positive electrode 10, a negative electrode 20, and a separator 30 between the positive electrode 10 and the negative electrode 20. Although not explicitly shown in FIG. 6, the rechargeable lithium battery according to the present disclosure may further include an electrolyte ELL. The separator 30 may be impregnated in the electrolyte ELL.

The positive electrode 10 may include a positive electrode current collector COL1 and a positive electrode active material layer AML1 disposed on at least one surface of the positive electrode current collector COL1. The negative electrode 20 may include a negative electrode current collector COL2 and a negative electrode active material layer AML2 disposed on at least one surface of the negative electrode current collector COL2. The separator 30 may be interposed between the positive electrode active material layer AML1 and the negative electrode active material layer AML2. The following description focuses on the positive electrode 10 and the negative electrode 20, or electrodes included in the rechargeable lithium battery.

Referring together to FIGS. 6, 7A, and 7B, the electrodes 10 and 20 included in the rechargeable lithium battery according to an example embodiment may include their respective current collectors COL1 and COL2 and their respective active material layers AML1 and AML2 disposed on at least one surface, e.g., disposed on both surfaces, of the current collectors COL1 and COL2, respectively. The current collectors COL1 and COL2 may have their respective top surfaces S1 and S3 and their respective bottom surfaces S2 and S4, and the active material layers AML1 and AML2 may be respectively disposed on at least one of the top surfaces S1 and S3 and the bottom surfaces S2 and S4.

The positive electrode 10 may include the positive electrode current collector COL1 and the positive electrode active material layer AML1 disposed on at least one surface of the positive electrode current collector COL1. The positive electrode 10 may include a first positive electrode active material layer AML1-1 disposed on the top surface S1 of the positive electrode current collector COL1, and a second positive electrode active material layer AML1-2 disposed on the bottom surface S2 of the positive electrode current collector COL1.

Each, or at least one, of the first positive electrode active material layer AML1-1 and the second positive electrode active material layer AML1-2 may be or include the positive electrode active material layer AML1 discussed above with reference to FIG. 1. Each, or at least one, of the first and second positive electrode active material layers AML1-1 and AML1-2 may include a positive electrode active material and may further include a binder and/or a conductive material. A description of the positive electrode active material, the binder, and the conductive material included in each, or at least one, of the first and second positive electrode active material layers AML1-1 and AML1-2 may be the same as the description discussed above with reference to FIG. 1.

The negative electrode 10 may include the negative electrode current collector COL2 and the negative electrode active material layer AML2 disposed on at least one surface of the negative electrode current collector COL2. The negative electrode 20 may include a first negative electrode active material layer AML2-1 disposed on the top surface S3 of the negative electrode current collector COL2 and a second negative electrode active material layer AML2-2 disposed on the bottom surface S4 of the negative electrode current collector COL2.

Each, or at least one, of the first and second negative electrode active material layers AML2-1 and AML2-2 may be or include the negative electrode active material layer AML2 discussed above with reference to FIG. 1. Each, or at least one, of the first and second negative electrode active material layers AML2-1 and AML2-2 may include a negative electrode active material, and may further include a binder and/or a conductive material. A description of the negative electrode active material, the binder, and the conductive material included in each, or at least one, of the first and second negative electrode active material layers AML2-1 and AML2-2 may be the same as the description discussed above with reference to FIG. 1.

The electrodes 10 and 20 included in the rechargeable lithium battery according to an example embodiment may include porous films PW1 and PW2 disposed in the active material layers AML1 and AML2, respectively. The positive electrode 10 may include a positive electrode side porous film PW1 disposed in the positive electrode active material layer AML1, and the negative electrode 20 may include a negative electrode side porous film PW2 disposed in the negative electrode active material layer AML2.

The porous films PW1 and PW2 may each include a plurality of pores. For example, the porous films PW1 and PW2 may have a porosity that is equal to or greater than about 60%, for example, in a range of about 60% to about 100%, or about 70% to about 80%. The pore of the porous films PW1 and PW2 may have a size ranging from about 50 nanometers to about 500 nanometers. When the porosity and the pore size fall within any of the ranges mentioned above, an active material may readily infiltrate into a film, and a porous film may contain an active material which amount is sufficient enough to constitute an electrolyte membrane.

The porous films PW1 and PW2 may have a small thickness. The porous films PW1 and PW2 may have a thickness in a range of about 5 micrometers to about 20 micrometers. For example, the porous films PW1 and PW2 may have a thickness of about 10 micrometers to about 15 micrometers.

The porous films PW1 and PW2 may have a weight in a range of about 2 g/m² to about 4 g/m². For example, the porous films PW1 and PW2 may have a weight of about 2.5 g/m² to about 3.5 g/m².

The porous films PW1 and PW2 may have a tensile strength in a range of about 0.1 N/mm to about 0.2 N/mm. For example, the porous films PW1 and PW2 may have a tensile strength of about 0.1 N/mm to about 0.13 N/mm.

The permeability per thickness of the porous films PW1 and PW2 may range from about 0.1 sec/100 ml to about 1 sec/100 ml. For example, the porous films PW1 and PW2 may have a permeability per thickness ranging from about 0.1 sec/100ml to about 0.5 sec/100 ml.

The porous films PW1 and PW2 may include at least one of polyester, polyolefin, polyacetal, polyamide, polycarbonate, polyimide, polyether ether ketone, polyether sulfone, polyphenylene oxide, and polyphenylene sulfide. For example, the polyester may include polyethylene terephthalate, polybutylene terephthalate, polyethylene naphthalate, and the like.

In an example embodiment, the porous films PW1 and PW2 may be or include a porous nonwoven fabric.

The porous films PW1 and PW2 may be provided or included in active material layers on opposite surfaces of the electrode current collectors COL1 and COL2. In the positive electrode 10 according to an example embodiment, the positive electrode side porous film PW1 may include a first positive electrode side porous film PW1-1 disposed in the first positive electrode active material layer AML1-1 and a second positive electrode side porous film PW1-2 disposed in the second positive electrode active material layer AML1-2. In the negative electrode 20 according to an example embodiment, the negative electrode side porous film PW2 may include a first negative electrode side porous film PW2-1 disposed in the first negative electrode active material layer AML2-1 and a second negative electrode side porous film PW2-2 disposed in the second negative electrode active material layer AML2-2.

The porous films PW1 and PW2 may be disposed or included in the active material layers AML1 and AML2, and may contain active materials that infiltrate into the active material layers AML1 and AML2. The positive electrode side porous film PW1 may be disposed or included in the positive electrode active material layer AML1, and a positive electrode active material may infiltrate into the pores of the positive electrode side porous film PW1. The negative electrode side porous film PW2 may be disposed or included in the negative electrode active material layer AML2, and a negative electrode active material may infiltrate into the pores of the negative electrode side porous film PW2.

The active material layers AML1 and AML2 may each be divided into a plurality of sub-layers based on placement positions of the porous films PW1 and PW2 and the current collectors COL1 and COL2. The active material layers AML 1 and AML2 may include first sub-layers P1-1 and P1-2 disposed on one surfaces of the current collectors COL1 and COL2, second sub-layers P2-1 and P2-2 disposed between the first sub-layers P1-1 and P2-1 and the porous films PW1 and PW2, and third sub-layers P3-1 and P3-2 disposed on the porous films PW1 and PW2. The third sub-layers P3-1 and P3-2 may be spaced apart from the second sub-layers P2-1 and P2-2 across the porous films PW1 and PW2. The positive electrode active material layer AML1 may include a 1-1^{st} sub-layer P1-1 disposed on one surface S1 or S2 of the positive electrode current collector COL1, a 2-1^{st} sub-layer P2-1 disposed between the 1-1^{st} sub-layer P1-1 and the positive electrode side porous film PW1, and a 3-1^{st} sub-layer P3-1 spaced apart from the 2-1^{st} sub-layer P2-1 across the positive electrode side porous film PW1. The negative electrode active material layer AML2 may include a 1-2^{nd} sub-layer P1-2 disposed on one surface S3 or S4 of the negative electrode current collector COL2, a 2-2^{nd} sub-layer P2-2 disposed between the 1-2^{nd} sub-layer P1-2 and the negative electrode side porous film PW2, and a 3-2^{nd} sub-layer P3-2 spaced apart from the 2-2^{nd} sub-layer P2-2 across the negative electrode side porous film PW2.

The first sub-layer P1-1 or P1-2 and the second sub-layer P2-1 or P2-2 may have a single unitary shape. No interface may be separately provided or included between the first sub-layers P1-1 and P1-2 and the second sub-layers P2-1 and P2-2, and an active material included in the first sub-layer P1-1 or P1-2 and an active material included in the second sub-layer P2-1 or P2-2 may be mixed to provide a mixed active material layer having a single unitary shape. For example, although not shown, an active material included in the second sub-layer P2-1 or P2-2 may be mixed with an active material that infiltrates into the pore of the porous film PW1 or PW2, thereby providing a mixed active material layer having a single unitary shape. An active material included in the third sub-layer P3-1 or P3-2 may be mixed with an active material that infiltrates into the pore of the porous film PW1 or PW2, thereby providing a mixed active material layer having a single unitary shape. For example, in the active material layer AML1 or AML2, an active material included in the first sub-layer P1-1 or P1-2, an active material included in the second sub-layer P2-1 or P2-2, an active material included in the third sub-layer P3-1 or P3-2, and an active material that infiltrates into the pore of the porous film PW1 or PW2 may be mixed with each other to provide one mixed active material layer.

A distance between the porous film PW1 or PW2 and the current collector COL1 or COL2 may be in a range of about 55% to about 90% of a total thickness of the active material layer AML1 or AML2. For example, a distance between the porous film PW1 or PW2 and the current collector COL1 or COL2 may be in a range of about 55% to about 80% of a total thickness of the active material layer AML1 or AML2.

In the positive electrode 10 according to an example embodiment, when a first thickness d1 is defined to refer to a thickness of the positive electrode active material layer AML1 disposed on one surface of the positive electrode current collector COL1, a minimum distance between the positive electrode current collector COL1 and the positive electrode side porous film PW1 may be in a range of about 55% to about 90% of the first thickness d1. The minimum distance between the positive electrode current collector COL1 and the positive electrode side porous film PW1 may be in a range of about 55% to about 80% of the first thickness d1. The minimum distance between the positive electrode current collector COL1 and the positive electrode side porous film PW1 may correspond to a second thickness d2 that is a sum of a thickness of the 1-1^{st} sub-layer P1-1 and a thickness of the 2-1^{st} sub-layer P2-1, and the second thickness d2 may be in a range of about 55% to about 90% of the first thickness d1. The second thickness d2 may be about 55% to about 80% of the first thickness d1. A third thickness d3, or a thickness of the 3-1^{st} sub-layer P3-1, may be equal to or less than about 10 micrometers.

In the negative electrode 20 according to an example embodiment, when a fourth thickness d4 is defined to refer to a thickness of the negative electrode active material layer AML2 disposed on one surface of the negative electrode current collector COL2, a minimum distance between the negative electrode current collector COL2 and the negative electrode side porous film PW2 may be in a range of about 55% to about 90% of the fourth thickness d4. The minimum distance between the negative electrode current collector COL2 and the negative electrode side porous film PW2 may be about 55% to about 80% of the fourth thickness d4. The minimum distance between the negative electrode current collector COL2 and the negative electrode side porous film PW2 may correspond to a fifth thickness d5 that is a sum of a thickness of the 1-2^{nd} sub-layer P1-2 and a thickness of the 2-2^{nd} sub-layer P2-2, and the fifth thickness d5 may be in a range of about 55% to about 90% of the fourth thickness d4. The fifth thickness d5 may be about 55% to about80% of the fourth thickness d4. A sixth thickness d6, or a thickness of the 3-2^{nd} sub-layer P3-2, may be equal to or less than about 10 micrometers.

The electrodes 10 and 20 included in the rechargeable lithium battery according to an example embodiment may include the porous films PW1 and PW2 disposed in the active material layers AML1 and AML2, and the active material layers AML1 and AML2 may include a plurality of sub-layers disposed on upper and lower sides of the porous films PW1 and PW2, thereby having their high loading levels. In this description, the loading level may be the amount of an active material per unit area of an electrode, and may be a factor calculated by taking into account a diffusion coefficient of lithium ions, conduction between particles, and a path to a current collector. In the rechargeable lithium battery according to an example embodiment, a loading level of the positive electrode active material layer AML1 included in the positive electrode 10 may be equal to or greater than about 35 mg/cm², for example, equal to or greater than about 45 mg/cm² when viewed in vertical section. In the rechargeable lithium battery according to an example embodiment, a loading level of the negative electrode active material layer AML2 included in the negative electrode 20 may be equal to or greater than about 15 mg/cm², for example, equal to or greater than about 22 mg/cm² when viewed in vertical section. A loading level of an active material layer of each electrode may be measured based on an active material layer disposed on one surface of the current collector COL1 or COL2. As the electrodes 10 and 20 of the rechargeable lithium battery have their high loading level as discussed above, the rechargeable lithium battery may achieve a high current density that is equal to or greater than about 6 mAh/cm², for example, a high current density of about 8 mAh/cm².

The loading level of the electrode according to the present invention may be higher compared to conventional electrodes. For example, the typical loading level of a positive electrode in an automotive battery may be about 20 mg/cm², and the loading level of a negative electrode may be about 10 mg/cm². Since the electrode according to the present invention is designed such that porous film provides supporting functionality, the loading level can be increased without side reactions, thereby maintaining excellent performance.

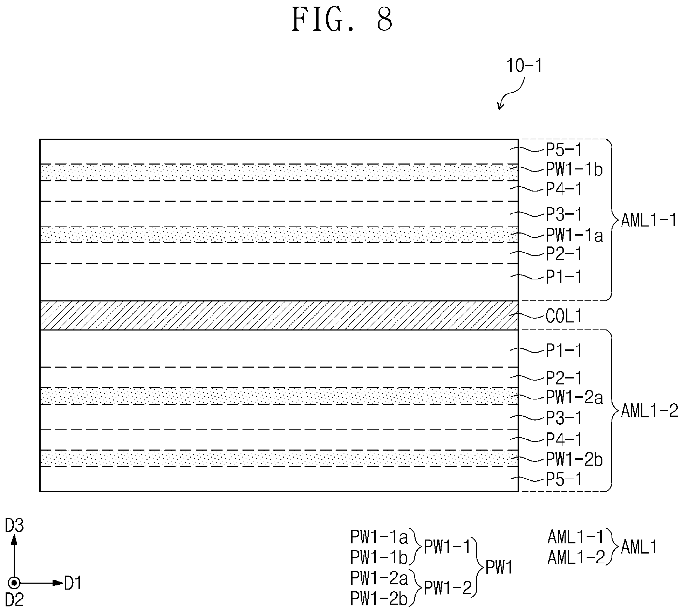

FIG. 8 is a cross-sectional view illustrating an electrode of a rechargeable lithium battery according to an example embodiment of the present disclosure. FIG. 8 illustrates a positive electrode 10-1 that is different from the positive electrode 10 of FIG. 7A, and the following description focuses on a difference between the positive electrode 10-1 and the positive electrode 10 of FIG. 7A. FIG. 8 explains by way of example the positive electrode 10-1 according to an example embodiment, but the explanation is identically or similarly applicable to a negative electrode included in the rechargeable lithium battery.

Referring to FIG. 8, an electrode included in a rechargeable lithium battery according to an example embodiment may include a current collector COL1, an active material layer AML1 disposed on at least one surface of the current collector COL1, and a porous film PW1 disposed in the active material layer AML1. In the active material layer AML1 disposed on one surface of the current collector COL1, the porous film PW1 may include a plurality of sub-porous films. The porous film PW1 may be provided within each, or at least one, of active material layers disposed on opposite surfaces of the current collector COL1 of the electrode, and each, or at least one, of the porous films PW1 provided within the active material layers disposed on the opposite surfaces may include a plurality of sub-porous films.

In an example embodiment, the positive electrode 10 may include a positive electrode active material layer AML1 disposed on at least one surface of the positive electrode current collector COL1 and a positive electrode side porous film PW1 disposed within the positive electrode active material layer AML1. The positive electrode 10 may include a first positive electrode active material layer AML1-1 disposed on a top surface S1 of the positive electrode current collector COL1, and a first sub-porous film PW1-1a and a second sub-porous film PW1-1b may be provided within the first positive electrode active material layer AML1-1. The second sub-porous film PW1-1b may be spaced apart from the positive electrode current collector COL1 across the first sub-porous film PW1-1a. The positive electrode 10-1 may include a second positive electrode active material layer AML1-2 disposed on a bottom surface S2 of the positive electrode current collector COL1, and a third sub-porous film PW1-2a and a fourth sub-porous film PW1-2b that are provided within the second positive electrode active material layer AML 1-2. The fourth sub-porous film PW1-2b may be spaced apart from the positive electrode current collector COL1 across the third sub-porous film PW1-2a.

Each, or at least one, of the plurality of sub-porous films PW1-1a, PW1-1b, PW1-2a, and PW1-2b may be disposed in the positive electrode active material layer AML1, and the sub-porous films PW1-1a, PW1-1b, PW1-2a, and PW1-2b may contain a positive electrode active material that infiltrates into the positive electrode active material layer AML1. The sub-porous films PW1-1a, PW1-1b, PW1-2a, and PW1-2b may be disposed in the positive electrode active material layer AML1, and an positive active material may infiltrate into the pores of the sub-porous films PW 1-1a, PW1-1b, PW1-2a, and PW1-2b.

The positive electrode active material layer AML1 may be divided into a plurality of sub-layers in accordance with arrangement of the sub-porous films PW1-1a, PW1-1b, PW1-2a, and PW1-2b and the positive electrode current collector COL1. The positive electrode active material layer AML1 may include a first sub-layer P1-1 disposed on one surface of the positive electrode current collector COL1, a second sub-layer P2-1 disposed between the first sub-layer P1-1 and the first sub-porous film PW1-1a, a third sub-layer P3-1 and a fourth sub-layer P4-1 that are disposed, e.g., sequentially disposed between the first sub-porous film PW1-1a and the second sub-porous film PW1-1b, and a fifth sub-layer P5-1 disposed on the second sub-porous film PW1-1b. The fifth sub-layer P5-1 may be spaced apart from the fourth sub-layer P4-1 across the second sub-porous film PW1-1b.

The first sub-layer P1-1 and the second sub-layer P2-1 may have a single unitary shape. No interface may be separately provided between the first sub-layer P1-1 and the second sub-layer P2-1, and an active material included in the first sub-layer P1-1 and an active material included in the second sub-layers P2-1 may be mixed to provide one mixed active material layer having a single unitary shape. The third sub-layer P3-1 and the fourth sub-layer P4-1 may have a single unitary shape. No interface may be separately provided between the third sub-layer P3-1 and the fourth sub-layer P4-1, and an active material included in the third sub-layer P3-1 and an active material included in the fourth sub-layers P4-1 may be mixed to provide one mixed active material layer having a single unitary shape. Although not shown in detail, an active material included in the second sub-layer P2-1 and an active material included in the third sub-layer P3-1 may be mixed with active materials that infiltrate into the pores of the first sub-porous film PW1-1a, thereby providing a mixed active material layer having a single unitary shape. An active material included in the fourth sub-layer P4-1 and an active material included in the fifth sub-layer P5-1 may be mixed with active materials that infiltrate into the pores of the second sub-porous film PW1-1b, thereby providing a mixed active material layer having a single unitary shape. For example, in the positive electrode active material layer AML1, an active material included in each, or at least one, of the first to fifth sub-layers P1-1 to P5-1 and an active material that infiltrates into the pores of each, or at least one, of the first and second sub-porous films PW1-1a and PW1-1b may be mixed to provide one mixed active material layer having a single unitary shape.

The following describes a method of manufacturing an electrode included in a rechargeable lithium battery according to an example embodiment. The method of manufacturing an electrode included in a rechargeable lithium battery according to an example embodiment may include coating a first preliminary active material layer on an electrode substrate, placing on the first preliminary active material layer a composite layer including a porous film, and integrally pressing the electrode substrate, the first preliminary active material layer, and the composite layer that are stacked, e.g., sequentially stacked.

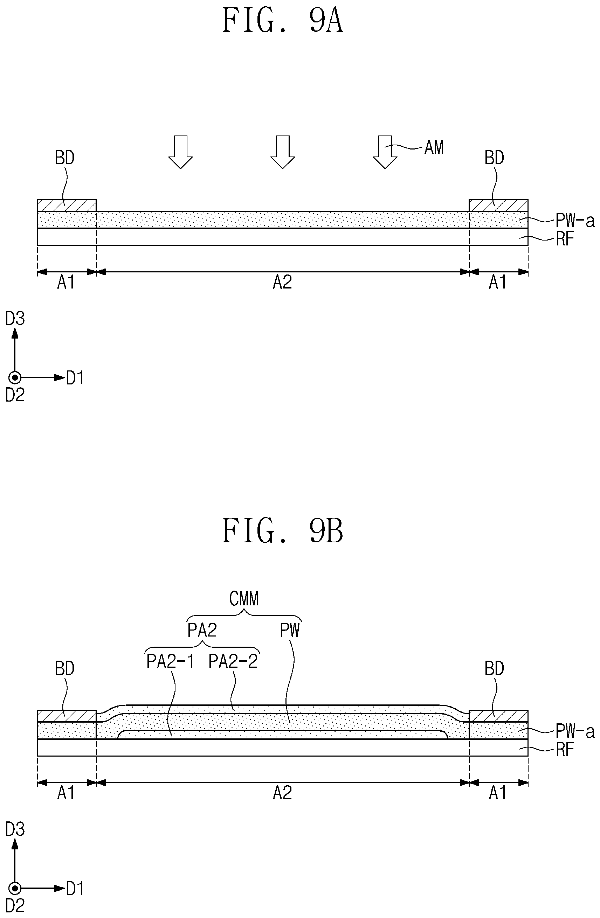

FIGS. 9A and 9B illustrate cross-sectional views showing a method of forming a composite layer according to an example embodiment of the present disclosure.

Referring to FIGS. 9A and 9B, a preliminary porous film PW-a may be provided on a release film RF.

The release film RF may be placed on a plane defined by a first direction D1 and a second direction D2. The second direction D2 may intersect the first direction D 1. The preliminary porous film PW-a may be provided on the release film RF. The preliminary porous film PW-a may be stacked along a third direction D3 on the release film RF. The third direction D3 may intersect each, or at least one, of the first direction D1 and the second direction D2. As discussed above, the preliminary porous film PW-a may include a plurality of pores. The pore of the preliminary porous film PW-a may have a size ranging from about 50 nanometers to about 500 nanometers. The preliminary porous film PW-a may have a small thickness. The preliminary porous films PW-a may have a thickness in a range of about 5 micrometers to about 20 micrometers. For example, the preliminary porous films PW-a may have a thickness of about 10 micrometers to about 15 micrometers. In an example embodiment, the preliminary porous film PW-a may be or include a porous nonwoven fabric.

As shown in FIG. 9a, a binder BD may be laminated on the preliminary porous film PW-a. The preliminary porous film PW-a may include a first region A1 on which the binder BD is laminated and a second region A2 on which the binder BD does not overlap, and the first region A1 may be positioned on opposite sides of the preliminary porous film PW-a. The second region A2 may be an area other than the first region A1.

The binder BD may be formed by being coated and subsequently cured on the first region A1 on the preliminary porous film PW-a. The binder BD may include at least one of a thermosetting resin and an ultraviolet curable resin.

After the formation of the binder BD, an active material AM may be provided on the preliminary porous film PW-a. The active material AM may be provided on the second region A2 of the preliminary porous film PW-a. After the active material AM is coated on the preliminary porous film PW-a, the provided active material AM may be cured.

The active material AM provided on the second region A2 of the preliminary porous film PW-a may infiltrate into the preliminary porous film PW-a. For example, where the active material AM is provided on the second region A2, the active material AM may infiltrate into the pores of the preliminary porous film PW-a. The active material AM may infiltrate into the pores of the preliminary porous film PW-a to form a porous film PW whose pores are filled with the active material AM. When the active material AM is coated to infiltrate into the preliminary porous film PW-a to form the porous film PW, a portion of the active material AM may remain outside the porous film PW and subsequently cured to form a second preliminary active material layer PA2. The porous film PW may be disposed on the second preliminary active material layer PA2.

After the active material AM is coated to infiltrate into the preliminary porous film PW-a, at least a portion of the second region A2 of the porous film PW may be spaced apart from the release film RF. A portion of the active material AM may move through the pores of the porous film PW such that a first portion PA2-1 of the second preliminary active material layer PA2 may be formed between the porous film PW and the release film RF. Another portion of the active material AM may not pass through the porous film PW such that a second portion PA2-2 of the second preliminary active material layer PA2 may be formed on the porous film PW. Although not shown in detail, an active material included in each, or at least one, of the first and second portions PA2-1 and PA2-2 of the second preliminary active material layer PA2 may have a single unitary shape with an active material impregnated in the porous film PW. After the active material AM is coated and cured, a composite layer CMM may be formed which includes the second preliminary active material layer PA2 and the porous film PW that is interposed between the first portion PA2-1 and the second portion PA2-2 of the second preliminary active material layer PA2.

The release film RF may be subsequently peeled off. For example, the release film RF may be separated from the composite layer CMM. Thus, the release film RF may include a material capable of being separated from the composite layer CMM. For example, the release film RF may include at least one of polyethylene terephthalate, polypropylene, polymethyl pentene, and any copolymer thereof.

The porous film PW included in the composite layer CMM may have a self-standing film shape. The self-standing film may indicate a thin layer or a film that maintains a certain shape on its own without being supported by another substrate. In an example embodiment, the composite layer CMM may have a shape constituted by components depicted in FIG. 9B from which are removed the release film RF, the binder BD, and the preliminary porous film PW-a on the first region A1.

The composite layer CMM may have a substantially uniform thickness. The composite layer CMM may have a thickness in a range of about 10 micrometers to about 500 micrometers. For example, the composite layer CMM may have a thickness of about 50 micrometers to about 200 micrometers, about 70 micrometers to about 180 micrometers, or about 90 micrometers to about 110 micrometers. The composite layer CMM of the present disclosure may be or include a substantially uniform layer having a small thickness of equal to or less than about 100 micrometers.

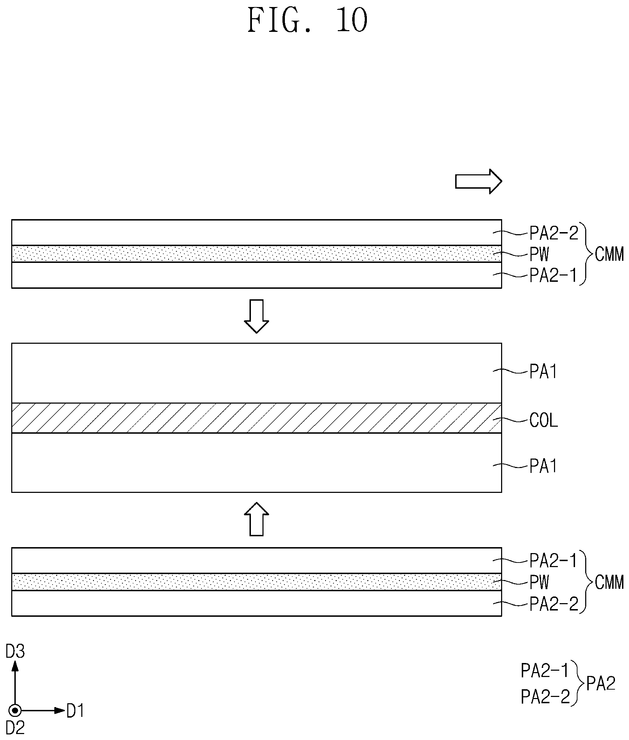

FIGS. 10 to 12 are cross-sectional views illustrating a method of manufacturing an electrode according to an example embodiment of the present disclosure.

Referring to FIG. 10, a first preliminary active material layer PA1 may be formed on an electrode substrate COL. The first preliminary active material layer PA1 may be formed on each, or at least one, of opposite surfaces of the electrode substrate COL. An active material may be coated and dried on each, or at least one, of opposite surfaces of the electrode substrate COL, thereby forming the first preliminary active material layer PA1. The electrode substrate COL shown in FIG. 10 may correspond to the positive electrode current collector COL1 or the negative electrode current collector COL2 discussed with reference to FIGS. 6 to 7B, and the first preliminary active material layer PA1 may correspond to the first sub-layer P1-1 or P1-2 discussed with reference to FIGS. 7A and 7B.

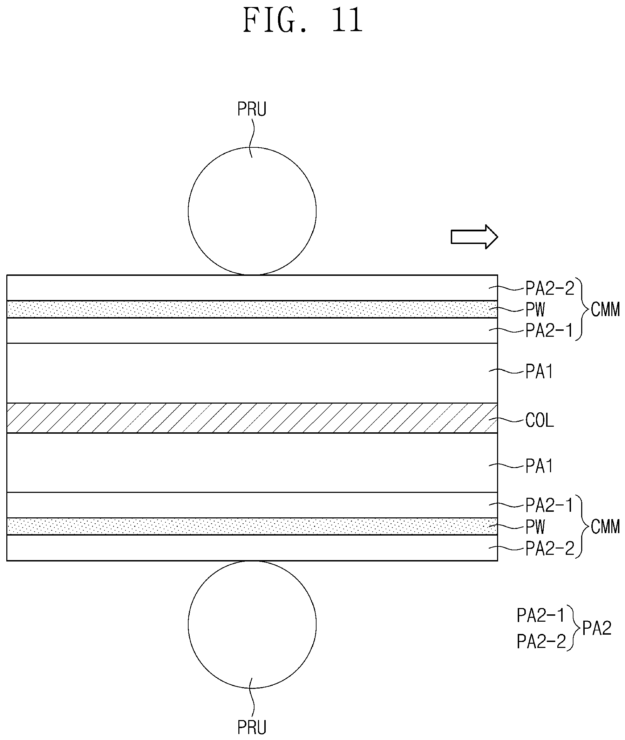

Referring to FIGS. 10 and 11, the composite layer CMM may be provided on the first preliminary active material layer PA1 formed on the electrode substrate COL. The composite layer CMM may be formed as described in FIGS. 9A and 9B, and may be provided to correspond to each, or at least one, of the first preliminary active material layers PA1 disposed on opposite surfaces of the electrode substrate COL. When the composite layer CMM is provided on the first preliminary active material layer PA1, the first portion PA2-1 of the second preliminary active material layer PA2 may be provided adjacent to the first preliminary active material layer PA1.

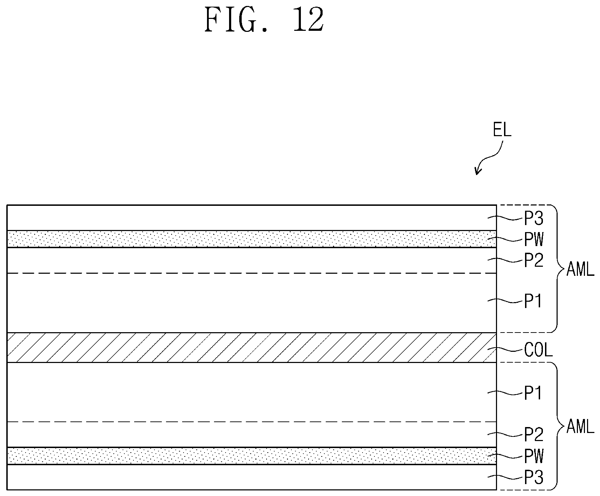

Referring to FIGS. 11 and 12, after the composite layer CMM is provided, the electrode substrate COL, the first preliminary active material layer PA1, and the composite layer CMM that are stacked, e.g., sequentially stacked may be integrally pressed simultaneously or contemporaneously. A pressing unit PRU may press the electrode substrate COL, the first preliminary active material layer PA1, and the composite layer CMM that are stacked, e.g., sequentially stacked.

The pressing unit PRU may include a pressing roller. The pressing unit PRU may roll the electrode substrate COL, the first preliminary active material layer PA1 on the electrode substrate COL, and the composite layer CMM on the first preliminary active material layer PA1.

After the pressing process using the pressing unit PRU, an active material layer AML may be formed. The active material layer AML may include a plurality of sub-layers P1, P2, and P3. The active material layer AML may include a first sub-layer P1 disposed on one surface of the electrode substrate COL, a second sub-layer P2 disposed between the first sub-layer P1 and the porous film PW, and a third sub-layer P3 disposed on the porous film PW. The third sub-layer P3 may be spaced apart from the second sub-layer P2 across the porous film PW. The first sub-layer P1 may be derived from the first preliminary active material layer PA1, the second sub-layer P2 may be derived from the first portion PA2-1 of the second preliminary active material layer PA2, and the third sub-layer P3 may be derived from the second portion PA2-2 of the second preliminary active material layer PA2.

The first sub-layer P1 and the second sub-layer P2 may have a single unitary shape. No interface may be separately provided between the first sub-layer P1 and the second sub-layer P2, and an active material included in the first sub-layer P1 and an active material included in the second sub-layers P2 may be mixed to provide one mixed active material layer having a single unitary shape. Although the first sub-layer P1 and the second sub-layer P2 are respectively derived from the first preliminary active material layer PA1 and the second preliminary active material layer PA2, the pressing process may force the first sub-layer P1 and the second sub-layer P2 to mix each other to have a single unitary shape.

Although not shown in detail, an active material included in the second sub-layer P2 may be mixed with an active material that infiltrates into the pores of the porous film PW, thereby providing a mixed active material layer having a single unitary shape. An active material included in the third sub-layer P3 may be mixed with an active material that infiltrates into the pores of the porous film PW, thereby providing a mixed active material layer having a single unitary shape. For example, in the active material layer AML, an active material included in the first sub-layer P1, an active material included in the second sub-layer P2, an active material included in the third sub-layer P3, and an active material that infiltrates into the pore of the porous film PW may be mixed with each other to provide one mixed active material layer.

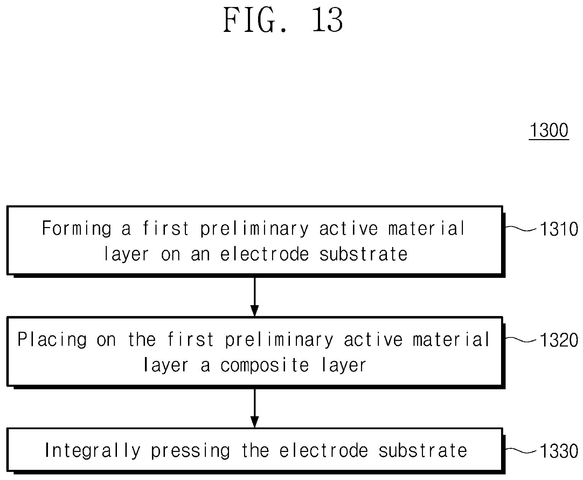

FIG. 13 is a flow chart illustrating a method of manufacturing an electrode for a rechargeable lithium battery, according to various example embodiments. In FIG. 13, the method 1300 includes operation 1310, which includes forming a first preliminary active material layer on an electrode substrate. Following operation 1310, operation 1320 includes placing on the first preliminary active material layer a composite layer that includes a porous film. For example, the composite layer is formed by providing a preliminary porous film, and providing an active material on the preliminary porous film to form the porous film and a second preliminary active material layer. For example, the porous film is formed by allowing the active material to infiltrate into the preliminary porous film. In another example, a thickness of the preliminary porous film is in a range of about 10 micrometers to about 15 micrometers. In a further example, a pore provided in the preliminary porous film has a size in a range of about 50 micrometers to about 500 micrometers.

Following operation 1320, operation 1330 includes integrally pressing the electrode substrate, the first preliminary active material layer, and the composite layer that are stacked, e.g., sequentially stacked. For example, integrally pressing the electrode substrate, the first preliminary active material layer, and the composite layer includes mixing the first preliminary active material layer and the second preliminary active material layer to form one mixed active material layer having a single unitary shape. In another example, in the mixed active material layer, a distance from one surface of the electrode substrate to the porous film is in a range of about 55% to about 80% of a total thickness of the mixed active material layer. In a further example, in the composite layer, the porous film is in the second preliminary active material layer.

The following description focuses on some example embodiments of the present disclosure. The following example embodiments are provided to aid in understanding of the present disclosure and are not intended to limit the scope of the present disclosure.

### Example Embodiment

### Manufacture of Positive Electrode:

LiNi_{0.6}Co_{0.2}Mn_{0.2}O₂ as a positive electrode active material, Super P^{™} as a carbonaceous conductive material, and a polyvinylidene fluoride (PVDF) solution as a binder were added and mixed to prepare an active material slurry. In the active material slurry, the active material, the conductive material, and the binder were mixed in a weight ratio of 98:1:1. The active material slurry was coated on opposite surfaces of an aluminum current collector having 12 micrometers in thickness, and the resultant product was dried and rolled (pressed) to manufacture a first positive electrode plate. In addition, the active material slurry was coated on a porous nonwoven fabric having 10 micrometers in thickness to prepare a positive electrode active material composite layer in the form of a self-standing film. The prepared positive electrode active material composite layer was stacked on opposite surfaces of the first positive electrode plate, and subsequently rolled (pressed) to form a positive electrode. The roll-pressing was carried out using a pressing roller at 25°C where a linear pressure of the pressing roller was controlled to about 2.3 tons, and a gap between upper and lower rollers was adjusted to zero to maximally roll-press the positive electrode, with the result that a thickness of the roll-pressed positive electrode was minimized to obtain a high mixture density. The positive electrode was manufactured to allow the positive electrode active material disposed on one surface of the current collector to have a loading level of 45 mg/cm².

### Manufacture of Negative Electrode:

A negative electrode active material slurry was prepared by mixing, in a weight ratio of 98:2, graphite powder (Japan carbon) as a negative electrode active material and a mixture containing styrene-butadiene rubber (SBR) and carboxyl methyl cellulose (CMC) mixed in a weight ratio of 1:1. The prepared negative electrode active material slurry was coated on opposite surfaces of a copper foil current collector having 8 µm in thickness to an amount of 19.5 mg/cm², and the coated electrode plate was dried at 100°C for one hour or more, and the resultant product was rolled (pressed) to manufacture a first negative electrode plate. In addition, the negative electrode active material slurry was coated on a porous nonwoven fabric having 10 micrometers in thickness to prepare a negative electrode active material composite layer in the form of a self-standing film. The prepared negative electrode active material composite layer was stacked on opposite surfaces of the first negative electrode plate, and subsequently rolled (pressed) to form a negative electrode. The negative electrode was manufactured to allow the negative electrode active material disposed on one surface of the current collector to have a loading level of 22 mg/cm².

### Fabrication of Rechargeable Lithium Battery:

The negative electrode, a polytetrafluoroethylene (PTFE) separator, and the positive electrode were stacked to fabricate a rechargeable lithium battery. 1.3M LiPF6, which dissolved in a mixed solvent containing ethylene carbonate (EC), ethylmethyl carbonate (EMC), and diethyl carbonate (DEC) mixed in a volume ratio of 3:5:2, was used as an electrolyte to fabricate a CR2032-type coin full-cell.

### Comparative Example 1

In a case of a rechargeable lithium battery according to comparative examples, without separately forming an active material composite layer in the form of a self-standing film during manufacturing the positive and negative electrodes as in Example Embodiment, after a positive active material was coated and dried on opposite surfaces of a current collector, a positive electrode active material was additionally coated and dried on the dried coating surface, and subsequently pressed to complete a fabrication process. A negative electrode was also manufactured in the same manner, and except for that mentioned above, a rechargeable lithium battery was fabricated in the same method as in Example Embodiment.

### Comparative Example 2

Without separately forming an active material composite layer in the form of a self-standing film during manufacturing the positive and negative electrodes as in Example Embodiment, a positive electrode active material was coated and dried on opposite surfaces of a current collector to achieve a final loading level from the beginning, and subsequently pressed to complete a fabrication process. However, when an electrode plate was completely dried after the fabrication process of Comparative Example 2, the electrode plate was cracked and an active material layer was separated from a substrate, reducing or preventing the electrode plate from being properly prepared. In this sense, it was impossible to fabricate a stable rechargeable lithium battery using the fabrication process of Comparative Example 2.

The rechargeable lithium batteries fabricated in Example Embodiment and Comparative Examples were each charged at about 25°C with a constant current at about 0.1C rate until a voltage was about 4.4 V (vs. Li), and the current was cutoff at about 0.05C rate while a voltage was maintained at about 4.4 V in a constant voltage mode. Subsequently, the rechargeable lithium batteries were discharged with a constant current of about 0.1C rate until a voltage was about 2.8 V (vs. Li) (formation process). The rechargeable lithium batteries that have undergone the formation process were charged at about 25°C with a constant current at about 0.5C rate until a voltage was about 4.4 V (vs. Li). Subsequently, the rechargeable lithium batteries were discharged at about 25°C with a constant current of about 0.5C rate, and this cycle was repeated under the same condition up to a 100^{th} cycle (100 times). In all charge-discharge cycles, a 10-minute resting time was provided after each charge-discharge cycle. Table 5 below lists some of the results of charge-discharge experiments at room temperature. A capacity retention rate at the 100^{th} cycle was defined according to Mathematical Equation 1 below. Capacity retention rate [%] = [discharge capacity at 100th cycle / discharge capacity at 1st cycle] × 100

**Table 1:**

| Category | Capacity retention rate [%] |
|---|---|
| Example Embodiment | 93.5 |
| Comparative Example 1 | 87.5 |
| Comparative Example 2 | - (rechargeable lithium battery was not fabricated) |

As shown in Table 1, the rechargeable lithium battery of Example Embodiment had superior room-temperature lifetime characteristics to that of the rechargeable lithium battery of Comparative Example 1. From the result in Table 1, the rechargeable lithium battery of Example Embodiment, which included an active material layer formed by rolling a self-standing film typed composite layer utilizing a porous nonwoven fabric, had a capacity retention rate that is more desired or improved than the capacity retention rate of the rechargeable lithium battery of Comparative Example 1, in which an active material layer was merely additionally applied without forming a self-standing film typed composite layer. Moreover, based on the results shown in Table 1 and the battery fabrication examples, compared to Comparative Example 2 in which the active material layer of the electrode plate was eventually peeled off when an active material was simply formed thick to correspond to a final loading level, the rechargeable lithium battery of Example Embodiment was stably fabricated because a self-standing film typed composite layer was provided.

According to an example embodiment of the present disclosure, as an electrode for a rechargeable lithium battery includes a porous film disposed in an active material layer and impregnated with an active material, the electrode may have a high loading level, and consequently, a rechargeable lithium battery including the electrode of the example embodiment may achieve a high current density.

According to an example embodiment of the present disclosure, an electrode for a rechargeable lithium battery may be formed by rolling a self-standing film typed porous film on an electrode substrate and an active material layer, and this relatively simple process may allow for fabricating the rechargeable lithium battery electrode with a high loading level.

While this disclosure has been described in connection with what is presently considered to be example embodiments, it is to be understood that the present disclosure is not limited to the disclosed example embodiments and is intended to cover various modifications and equivalent arrangements included within the spirit and scope of the appended claims, and therefore the aforementioned example embodiments should be understood to be exemplarily but not limiting this disclosure in any way.

## Claims

1. An electrode (10;20) for a rechargeable lithium battery (100), the electrode (10;20) comprising:
a current collector;
an active material layer on at least one surface of the current collector; and
a porous film in the active material layer.

2. The electrode (10;20) of claim 1, wherein a distance from the one surface of the current collector to the porous film is in a range of about 55% to about 80% of a total thickness of the active material layer.

3. The electrode (10;20) of claim 1 or 2, wherein the active material layer comprises:
a first sub-layer on the at least one surface of the current collector;
a second sub-layer between the first sub-layer and the porous film; and
a third sub-layer on the porous film.

4. The electrode (10;20) of any of the claims 1 to 3, wherein the porous film comprises a porous nonwoven fabric.

5. The electrode (10;20) of any of the claims 1 to 4, wherein a thickness of the porous film is in a range of about 10 micrometers to about 15 micrometers.

6. The electrode (10;20) of any of the claims 1 to 5,
wherein the current collector comprises:
a top surface; and
a bottom surface opposite to the top surface,
wherein the active material layer comprises:
a first active material layer on the top surface of the current collector; and
a second active material layer on the bottom surface of the current collector,
wherein the first active material layer comprises a first porous film disposed therein,
wherein the second active material layer comprises a second porous film disposed therein.

7. The electrode (10;20) of any of the claims 1 to 6, wherein the active material layer comprises a positive electrode active material, and
wherein a loading level of the positive electrode active material is equal to or greater than about 35 mg/cm², and/or
wherein the active material layer comprises a negative electrode active material, and
wherein a loading level of the negative electrode active material is equal to or greater than about 15 mg/cm².

8. The electrode (10;20) of any of the claims 1 to 7, wherein the porous film comprises:
a first sub-porous film in the active material layer; and
a second sub-porous film spaced apart from the at least one surface of the current collector across the first sub-porous film.

9. A rechargeable lithium battery (100), comprising:
a positive electrode (10);
a negative electrode (20) opposite to the positive electrode (10); and
a separator (30) between the positive electrode (10) and the negative electrode (20),
wherein at least one of the positive electrode (10) and the negative electrode (20) is an electrode according to any of the claims 1 to 8.

10. The rechargeable lithium battery (100) of claim 9, wherein the positive electrode (10) comprises:
a positive electrode current collector;
a positive electrode active material layer on at least one surface of the positive electrode current collector; and
a positive electrode side porous film in the positive electrode active material layer,
wherein a distance from the at least one surface of the positive electrode current collector to the positive electrode side porous film is in a range of about 55% to about 80% of a total thickness of the positive electrode active material layer, and/or
wherein the negative electrode (20) comprises:
a negative electrode current collector;
a negative electrode active material layer on at least one surface of the negative electrode current collector; and
a negative electrode side porous film in the negative electrode active material layer,
wherein a distance from the at least one surface of the negative electrode current collector to the negative electrode side porous film is in a range of about 55% to about 80% of a total thickness of the negative electrode active material layer.

11. The rechargeable lithium battery (100) of claim 9 or 10, wherein:
at least one of the positive electrode (10), the negative electrode (20), and the separator (30) is provided in plural, and
at least one of the plurality of separators (30) is between one of the plurality of positive electrodes (10) and an adjacent one of the plurality of negative electrodes (20).

12. A method of manufacturing an electrode for a rechargeable lithium battery (100), the method comprising:
forming a first preliminary active material layer on an electrode substrate;
placing on the first preliminary active material layer a composite layer that includes a porous film; and
integrally pressing the electrode substrate, the first preliminary active material layer, and the composite layer that are stacked together,
wherein the composite layer is formed by:
providing a preliminary porous film; and
providing an active material on the preliminary porous film to form the porous film and a second preliminary active material layer,
wherein, in the composite layer, the porous film is in the second preliminary active material layer.

13. The method of claim 12, wherein integrally pressing the electrode substrate, the first preliminary active material layer, and the composite layer comprises mixing the first preliminary active material layer and the second preliminary active material layer to form one mixed active material layer having a single unitary shape.

14. The method of claim 12 or 13, wherein the porous film is formed by allowing the active material to infiltrate into the preliminary porous film.

15. The method of any of the claims 12 to 14, wherein a pore provided in the preliminary porous film has a size in a range of about 50 micrometers to about 500 micrometers.
